# FASCICULE DE BREVET EUROPEEN

(11) **EP 0 798 317 B1**
(45) Date de publication et mention de la délivrance du brevet: **28.06.2000**
(21) Numéro de dépôt: 97200816.3
(22) Date de dépôt: 20.03.1997
(51) Int. Cl.: C08F 210/16, C08F 4/24

(54) **Terpolymère d'éthylène, procédé pour son obtention et composition consistant essentiellement en terpolymère**
Ethylen Terpolymer, Verfahren zu seiner Herstellung und Zusammensetzung, die im wesentlichen aus diesem Terpolymer besteht
Ethylene terpolymer, process for its preparation and composition, consisting essentially of said terpolymer

(30) Priorité: 29.03.1996 BE 9600274
(43) Date de publication de la demande: 01.10.1997
(73) Titulaire: SOLVAY POLYOLEFINS EUROPE - BELGIUM (Société Anonyme), 1050 Bruxelles (BE)
(72) Inventeur: Breulet, Jacques, 1970 Wezembeek-Oppem (BE)
(74) Mandataire: Destryker, Elise Martine

(56) Documents cités:
- EP-A- 0 021 605
- EP-A- 0 436 520
- FR-A- 2 530 645

## Description

La présente invention concerne des terpolymères statistiques de l'éthylène adaptés à la fabrication d'objets extrudés, en particulier de tuyaux. Elle concerne plus particulièrement des terpolymères statistiques de l'éthylène comprenant des unités monomériques dérivées du 1-butène et du 1-hexène et un procédé pour leur obtention, ainsi que des compositions consistant essentiellement en de tels terpolymères.

Depuis plusieurs années des polyéthylènes ont été utilisés pour la production de tuyaux, en particulier pour des tuyaux destinés au transport de fluides sous pression, notamment du gaz naturel et de l'eau potable. Ces tuyaux doivent impérativement présenter de très bonnes propriétés mécaniques et qui soient durables dans le temps, en particulier une résistance à la fissuration sous tension et une résistance au fluage sous pression hydrostatique élevées.

Des terpolymères à base d'éthylène comprenant des unités monomériques dérivées du 1-butène et du 1-hexène sont connus dans la littérature. La demande de brevet français FR-A-2530645 divulgue des terpolymères éthylène/1-butène/1-hexène comprenant de 87 à 97 % en poids d'unités dérivées de l'éthylène et présentant une masse volumique standard inférieure à 930 kg/m³. La demande de brevet européen EP-A-21605 divulgue des terpolymères éthylène/1-butène/1-hexène comprenant de 0,3 à 6,5 % molaire d'unités dérivées du 1-hexène et de 0,6 à 8,2 % molaire d'unités dérivées du 1-butène et présentant une masse volumique de 910 à 940 kg/m³. Ces terpolymères de l'art antérieur sont décrits comme étant adaptés à la fabrication de films.

On a maintenant trouvé des terpolymères statistiques de l'éthylène contenant des unités monomériques dérivées du 1-butène et du 1-hexène qui conviennent particulièrement bien pour la fabrication de tuyaux.

A cet effet la présente invention concerne un terpolymère statistique de l'éthylène présentant une masse volumique standard de 936 à 943 kg/m³ et contenant :
- de 98,2 à 99,8 % molaire d'unités dérivées de l'éthylène,
- de 0,1 à 0,3 % molaire d'unités dérivées du 1-butène, et
- de 0,1 à 1,5 % molaire d'unités dérivées du 1-hexène.

Les teneurs en unités dérivées de l'éthylène, du 1-butène et du 1-hexène du terpolymère selon l'invention sont mesurées par RMN ¹³C selon la méthode décrite dans J.C.RANDALL, JMS-REV.MACROMOL.CHEM.PHYS., C29(2&3), p.201-317 (1989), c'est-à-dire que les teneurs en unités dérivées du 1-butène et en 1-hexène, sont calculées à partir des mesures des intégrales des raies caractéristiques du 1-butène (11,18 et 39,6 ppm) et du 1-hexène (23,4, 34,9 et 38,1 ppm) par rapport à l'intégrale de la raie caractéristique des unités dérivées de l'éthylène (30 ppm).

Les terpolymères statistiques de la présente invention contiennent, de préférence, au moins 98,5 % molaire d'unités dérivées de l'éthylène. Particulièrement préférés sont des terpolymères qui contiennent au moins 98,8 % molaire d'unités dérivées de l'éthylène. De manière préférée, la quantité d'unités monomériques dérivées de l'éthylène ne dépasse pas 99,6 % molaire, et plus particulièrement, elle ne dépasse pas 99,3 % molaire.

La quantité d'unités monomériques dérivées du 1-butène dans les terpolymères selon l'invention est, de préférence d'environ 0,2 % molaire.

La quantité d'unités monomériques dérivées du 1-hexène dans les terpolymères selon l'invention est, de préférence d'au moins 0,3 % molaire, plus particulièrement d'au moins 0,6 % molaire. De manière préférée, la quantité d'unités monomériques dérivées du 1-hexène ne dépasse pas 1,2 % molaire. Particulièrement préférés sont des terpolymères dont la quantité d'unités dérivées du 1-hexène ne dépasse pas 0,9 % molaire.

Tout particulièrement préféré est un terpolymère contenant de 98,8 à 99,3 % molaire d'unités dérivées de l'éthylène, de 0,1 à 0,3 % molaire d'unités dérivées du 1-butène et de 0,6 à 0,9 % molaire d'unités dérivées du 1-hexène.

De bons résultats ont été obtenus avec des terpolymères statistiques constitués essentiellement d'unités monomériques dérivées de l'éthylène, du 1-hexène et du 1-butène.

Les terpolymères selon l'invention présentent de préférence une masse volumique standard, mesurée selon la norme ASTM D 1505, de 938 à 940 kg/m³.

Les terpolymères selon l'invention présentent généralement un indice de fluidité en fondu, mesuré à 190 °C sous une charge de 2,16 kg selon la norme ASTM D 1238 (1986) et appelé MI_{2.16}, d'environ 0,1 à 0,3 g/10 min, de préférence de 0,1 à 0,2 g/10 min. Ils présentent généralement un indice de fluidité en fondu, mesuré à 190 °C sous une charge de 5 kg selon la norme ASTM D 1238, et appelé MI₅, d'environ 0,7 à 1,0 g/10 min, de préférence de 0,8 à 0,9 g/10 min. Les terpolymères selon l'invention présentent généralement un indice de fluidité en fondu, mesuré à 190 °C sous une charge de 21,6 kg selon la norme ASTM D 1238, et appelé HLMI, d'environ 12 à 20 g/10 min, de préférence de 14 à 18 g/10 min.

Des terpolymères selon l'invention qui donnent de bons résultats présentent un rapport HLMI/MI_{2.16} d'environ 70 à 100. Le rapport HLMI/MI_{2.16} est de préférence d'environ 75 à 90.

La présente invention concerne également un procédé d'obtention des terpolymères selon l'invention.

Les terpolymères selon l'invention peuvent être obtenus par n'importe quel procédé connu de polymérisation d'oléfines. Ils sont de préférence obtenus par un procédé de polymérisation en suspension. Le procédé de polymérisation en suspension est de préférence effectué en continu dans un réacteur boucle.

La polymérisation en suspension est généralement effectuée dans un diluant hydrocarboné, aromatique, cycloaliphatique ou aliphatique à une température telle que au moins 80 % en poids du terpolymère formé est insoluble dans ce diluant. Le diluant utilisé est de préférence un alcane linéaire, tel que le n-butane, le n-hexane ou le n-heptane, ou un alcane branché, tel que l'isobutane, l'isopentane ou le 2,2-diméthylpropane. Le diluant est de préférence l'isobutane.

La température de polymérisation en suspension est généralement au moins 55 °C, de préférence au moins 90 °C. La température de polymérisation ne dépasse généralement pas 150 °C, de préférence pas 110 °C.

La polymérisation en suspension est généralement effectuée à une pression comprise entre la pression atmosphérique et 4.10⁶ Pa. La pression est de préférence d'au moins de 3,8.10⁶ Pa. La pression de l'éthylène est généralement réglée de façon à ce que la concentration de l'éthylène dans le diluant est d'au moins 1 % molaire, de préférence d'au moins 3 % molaire. La pression de l'éthylène est généralement réglée de façon à ce que la concentration de l'éthylène dans le diluant ne dépasse pas 20 % molaire, de préférence pas 10 % molaire.

La pression du 1-hexène est généralement réglée de façon à ce que le rapport pondéral 1-hexène/éthylène dans le diluant est de 3 à 60 g/kg. De manière préférée, la pression du 1-hexène est réglée de façon à ce que le rapport pondéral 1-hexène/éthylène est d'au moins 10 g/kg, plus particulièrement d'au moins 20 g/kg. La pression du 1-hexène est de préférence réglée de façon à ce que le rapport pondéral 1-hexène/éthylène dans le diluant ne dépasse pas 45 g/kg. De manière particulièrement préférée, le rapport pondéral 1-hexène/éthylène ne dépasse pas 30 g/kg.

La pression du 1-butène est généralement réglée de façon à ce que le rapport pondéral 1-butène/éthylène dans le diluant est de 0,95 à 3 g/kg. De manière préférée, la pression du 1-butène est réglée de façon à ce que le rapport pondéral 1-butène/éthylène est d'au moins 1,5 g/kg. La pression du 1-butène est de préférence réglée de façon à ce que le rapport pondéral 1-butène/éthylène dans le diluant ne dépasse pas 2,5 g/kg.

La polymérisation en suspension est de préférence effectué au moyen d'un catalyseur d'oxyde de chrome supporté. Le support est généralement un support inorganique. Il est de préférence choisi parmi les oxydes de silicium, de titane, de zirconium, d'aluminium, de thorium et leur mélanges. Particulièrement préférés sont la silice et un cogel silice/titane.

Le catalyseur d'oxyde de chrome utilisé comprend généralement au moins 0,1 %, de préférence au moins 0,25 %, en poids de chrome par rapport au poids total du catalyseur. Il comprend généralement moins que 5 %, de préférence moins que 2 %, en poids de chrome par rapport au poids total du catalyseur. Le catalyseur au chrome est généralement obtenu par imprégnation du support avec une solution d'un composé du chrome, suivie d'un séchage en atmosphère oxydante. On peut utiliser à cet effet un composé du chrome choisi parmi ses sels solubles tels que les oxydes, l'acétate, le chlorure, le sulfate, le bichromate ou l'acétylacétonate. Après l'imprégnation du support avec le composé du chrome, le support imprégné est habituellement activé en le chauffant sous une atmosphère d'air ou d'oxygène, à une température de 400 à 1000 °C, de préférence de 500 à 800 °C, pour transformer une partie au moins du chrome en chrome hexavalent.

Les terpolymères statistiques selon l'invention sont de préférence obtenus par polymérisation en continu d'un mélange d'éthylène, de 1-hexène et de 1-butène, à une température de 90 à 110 °C, en suspension dans de l'isobutane, au moyen d'un catalyseur d'oxyde de chrome supporté sur un support inorganique comprenant de 0,25 à 2 % en poids de chrome, préactivé sous air à une température de 500 à 800 °C.

Les terpolymères selon l'invention conviennent bien pour le façonnage en fondu d'articles très divers. A cet effet, les terpolymères sont généralement mélangés avec les additifs de mise en oeuvre usuels des polyoléfines, tels que des stabilisants (des agents antiacides, antioxydants et/ou anti-UV), des agents antistatiques et des agents de mise en oeuvre ("processing aid") ainsi que des pigments.

L'invention concerne dès lors également une composition comprenant un terpolymère selon l'invention et au moins un des additifs décrits ci-dessus. La teneur en additifs de la composition est en général inférieure à 10 et le plus souvent inférieure à 5 parties pour 100 parties en poids de terpolymère. Particulièrement préférées sont les compositions constituées essentiellement de terpolymères selon l'invention. Ces compositions comprennent généralement au moins 95 %, de préférence au moins 99 %, en poids d'un terpolymère par rapport au poids total de la composition.

Les compositions selon l'invention peuvent être préparées par n'importe quelle méthode connue de préparation de compositions polymériques incorporant des additifs. Par exemple, une méthode de préparation consiste à introduire les additifs tels que définis ci-dessus, à l'état de mélange en poudre, dans le terpolymère, d'abord à température ambiante, puis de les mélanger à une température supérieure à la température de fusion du polymère dans un mélangeur mécanique ou dans une extrudeuse.

Les compositions selon l'invention présentent généralement une masse volumique standard, mesurée selon la norme ASTM D 1505, de 938 à 945 kg/m³, plus particulièrement de 940 à 944 kg/m³.

Les compositions selon l'invention présentent généralement un indice de fluidité MI_{2.16}, d'environ 0,1 à 0,3 g/10 min, de préférence de 0,1 à 0,2 g/10 min. Ils présentent généralement un indice de fluidité MI₅, d'environ 0,7 à 1,0 g/10 min, de préférence de 0,8 à 0,9 g/10 min. Les compositions selon l'invention présentent généralement un indice de fluidité HLMI, d'environ 12 à 20 g/10 min, de préférence de 14 à 18g/10 min.

Les compositions selon l'invention qui donnent de bons résultats présentent un rapport HLMI/MI_{2.16} d'environ 70 à 100. Le rapport HLMI/MI_{2.16} est de préférence d'environ 75 à 90.

Les compositions selon l'invention se caractérisent généralement par une tension maximale élastique, mesurée à 23 °C et à 100 mm/min selon la norme ISO 527 d'environ 18 à 25 MPa, d'une tension à la rupture, mesurée dans les mêmes conditions, d'environ 25 à 35 MPa et un allongement à la rupture, mesuré dans les mêmes conditions, d'au moins 550 %.

Les compositions selon l'invention se caractérisent par une bonne résistance à la propagation rapide de fissures. La résistance à la propagation rapide de fissures est mesurée selon la méthode S4 décrite à l'annexe D du projet de norme ISO/DIS 4437(version publiée en 1994). Cette méthode permet de déterminer la pression d'air interne minimale à laquelle il peut y avoir une propagation rapide de fissures le long d'une section de tube constitué de la composition. Mesurée selon ladite méthode et à une température de 0 °C, les compositions selon l'invention résistent généralement à la propagation rapide de fissures à une pression interne au moins égale à 1,7 bar.

Les compositions selon l'invention se caractérisent par une bonne résistance à la propagation lente de fissures, mesurée selon la méthode décrite à l'annexe F du projet de norme ISO/DIS 4437 (version publiée en 1994). Cette méthode exprime, en terme de temps à la rupture, la résistance à la propagation lente de fissures sur un tube entaillé constitué de la composition. Les compositions selon l'invention présentent généralement un temps à la rupture, mesuré à 80 °C sous une pression hydrostatique de 4,0 MPa, supérieur à 165 heures. Le plus souvent, elles présentent un temps à la rupture supérieur à 1000 heures.

Les compositions selon l'invention se caractérisent par un niveau de résistance à la pression hydrostatique, mesurée selon la norme ISO TR 9080:1992, qui permet de les classer dans la catégorie PE 80 (MRS 8.0), c'est-à-dire que l'on peut prévoir qu'ils présentent une résistance à la rupture à 20 °C sous une pression hydrostatique supérieure à 8,0 MPa pendant 50 ans.

Les compositions selon l'invention conviennent bien pour être mises en oeuvre selon tous les procédés classiques de façonnage d'articles et plus particulièrement les procédés d'extrusion. Elles conviennent particulièrement bien pour l'extrusion de tuyaux, notamment les tuyaux pour le transports de fluides sous pression, tel que du gaz naturel. Les compositions selon l'invention se caractérisent généralement par une résistance aux constituants du gaz mesurée sous une pression de 2 MPa à 80 °C, selon la méthode décrite à l'annexe B du projet de norme ISO/DIS 4437 (version publiée en 1994), supérieure à 20 heures.

La fabrication de tuyaux est habituellement effectuée sur une chaîne d'extrusion comprenant une extrudeuse, un calibreur et un dispositif de tirage. L'extrusion est généralement réalisée sur une extrudeuse du type monovis et à une température de 150 à 230 °C. Le calibrage des tuyaux peut être effectué par la création d'une dépression à l'extérieur du tuyau et/ou par la création d'une surpression à l'intérieur du tuyau.

L'invention concerne également les objets façonnés à partir de la composition selon l'invention, en particulier des tuyaux, notamment de tuyaux pour le transport de fluides sous pression obtenus par extrusion d'une composition selon l'invention.

L'exemple dont la description suit, sert à illustrer l'invention. La signification des symboles utilisés dans cet exemple, les unités exprimant les grandeurs mentionnés et les méthodes de mesure de ces grandeurs ont été explicitées ci-dessus.

### Exemple

Dans un réacteur boucle comprenant de l'isobutane, à une température de 93 °C, de l'éthylène, du 1-butène et du 1-hexène ont été introduits en continu dans une quantité telle que la concentration de l'éthylène dans l'isobutane était de 5,2 % molaire, que le rapport pondéral 1-butène/éthylène dans l'isobutane était de 1,97 g/kg et que le rapport pondéral 1-hexène/éthylène dans l'isobutane était de 28,2 g/kg. La température et les concentrations en éthylène, 1-butène et 1-hexène sont maintenues constantes durant toute la polymérisation. Un catalyseur d'oxyde de chrome supporté sur un cogel silice/titane comprenant 1 % en poids de chrome (MAGNAPORE®963 de GRACE) et préalablement activé sous air à une température de 595 °C, a été introduit dans le réacteur en une quantité adaptée pour obtenir une productivité de 10100 kg de terpolymère par heure de polymérisation.

L'analyse par RMN du terpolymère produit démontrait qu'il comprenait 99,0 % molaire d'unités monomériques dérivées de l'éthylène, 0,8 % molaire d'unités monomériques dérivées du 1-hexène et 0,2 % molaire d'unités monomériques dérivées du 1-butène.

Le terpolymère présentait, un MI_{2.16} <0,2 g/10 min, un MI₅ de 0,85 g/10 min et un HLMI de 16 g/10 min.

Une composition à base de ce terpolymère a été préparée en mélangeant dans un mélangeur mécanique les constituants suivants :
- 99 parties en poids du terpolymère décrit ci-dessus,
- 0,20 partie d'un stabilisant anti-UV (TINUVIN®770, bis(2,2,6,6-tétraméthyl-4-pipéridinyl)sébacate),
- 0,15 partie d'un autre stabilisant anti-UV (TINUVIN®327, 2-(2'-hydroxy,3',5'-ditert-butylphényl)-5-chlorobenzotriazole),
- 0,30 partie d'un stabilisant antioxydant (IRGANOX®B225, comprenant 50 % de pentaérythrityl tétrakis(3,5-ditert-butyl-4-hydroxyphényl propionate) et 50 % de tris(2,4-ditert-butylphényl)phosphite),
- 0,25 partie d'un pigment (SICOTAN®K1011),
- 0,1 partie d'un autre pigment (PALIOTOL®K0961 HD).

Ce mélange a été granulé par extrusion dans une extrudeuse à une température de 230 °C.

Les granules obtenues présentaient un MI_{2.16} <0,2 g/10 min, un MI₅ de 0,88 g/10 min et un HLMI de 16 g/10 min et une masse volumique standard de 943,5 kg/m³.

Un tuyau d'un diamètre de 32 mm a été fabriqué par extrusion de ces granules sur une extrudeuse de type monovis à 200 °C.

Le tuyau présente une résistance aux constituants du gaz, mesurée sous une pression de 2 MPa à 80 °C, supérieure à 30 heures.

Le tuyau obtenu présente une résistance à la pression hydrostatique, mesurée selon la norme ISO TR 9080:1992, qui permet d'estimer sa résistance à la rupture à long terme (50 ans, à 20 °C) à 9,27 MPa et de le classer dès lors dans la catégorie PE 80.

Un autre tuyau d'un diamètre de 110 mm a été fabriqué de la même manière.

Ce tuyau résiste à la propagation rapide de fissures, mesurée à une température de 0 °C, à une pression interne supérieure à 1,7 bar.

Ce tuyau présente une résistance à la propagation lente de fissures, mesurée à 80 °C sous une pression hydrostatique de 4,0 MPa, supérieure à 3000 heures.

## Revendications

1. Terpolymère statistique de l'éthylène présentant une masse volumique standard de 936 à 943 kg/m³ et contenant :
- de 98,2 à 99,8 % molaire d'unités dérivées de l'éthylène,
- de 0,1 à 0,3 % molaire d'unités dérivées du 1-butène, et
- de 0,1 à 1,5 % molaire d'unités dérivées du 1-hexène.

2. Terpolymère selon la revendication 1, caractérisé en ce qu'il contient
- de 98,8 à 99,3 % molaire d'unités dérivées de l'éthylène,
- de 0,1 à 0,3 % molaire d'unités dérivées du 1-butène, et
- de 0,6 à 0,9 % molaire d'unités dérivées du 1-hexène.

3. Terpolymère selon la revendication 1 ou 2, caractérisé en ce qu'il présente une masse volumique standard de 938 à 940 kg/m³.

4. Terpolymère selon l'une quelconque des revendications 1 à 3, caractérisé en ce qu'il présente un indice de fluidité (MI_{2.16}) mesuré sous une charge de 2,16 kg selon la norme ASTM D 1238 d'environ 0,1 à 0,3 g/10 min.

5. Terpolymère selon l'une quelconque des revendications 1 à 4, caractérisé en ce qu'il présente un indice de fluidité (MI₅) mesuré sous une charge de 5 kg selon la norme ASTM D 1238 d'environ 0,7 à 1,0 g/10 min.

6. Terpolymère selon l'une quelconque des revendications 1 à 5, caractérisé en ce qu'il présente un indice de fluidité (HLMI) mesuré sous une charge de 21,6 kg selon la norme ASTM D 1238 d'environ 12 à 20 g/10 min.

7. Terpolymère selon l'une quelconque des revendications 1 à 6, caractérisé en ce qu'il présente un rapport HLMI/MI_{2.16} d'environ 70 à 100.

8. Procédé d'obtention d'un terpolymère selon l'une quelconque des revendications 1 à 7, dans lequel un mélange d'éthylène, de 1-butène et de 1-hexène est polymérisé en continu à une température de 90 à 110 °C, en suspension dans de l'isobutane, au moyen d'un catalyseur d'oxyde de chrome supporté sur un support inorganique comprenant de 0,25 à 2 % en poids de chrome, préactivé sous air à une température de 500 à 800 °C.

9. Composition constituée essentiellement d'un terpolymère selon l'une quelconque des revendications 1 à 7.

10. Composition selon la revendication 9, caractérisé en ce qu'elle présente un niveau de résistance à la pression hydrostatique, mesurée selon la norme ISO TR 9080:1992, qui permet de la classer dans la catégorie PE 80.

11. Tuyaux pour le transport de fluides sous pression obtenus par extrusion d'une composition selon la revendication 9 ou 10.

## Claims

1. Random ethylene terpolymer exhibiting a standard density of 936 to 943 kg/m³ and containing :
- from 98.2 to 99.8 mol% of units derived from ethylene,
- from 0.1 to 0.3 mol% of units derived from 1-butene, and
- from 0.1 to 1.5 mol% of units derived from 1-hexene.

2. Terpolymer according to Claim 1, characterized in that it contains
- from 98.8 to 99.3 mol% of units derived from ethylene,
- from 0.1 to 0.3 mol% of units derived from 1-butene, and
- from 0.6 to 0.9 mol% of units derived from 1-hexene.

3. Terpolymer according to Claim 1 or 2, characterized in that it has a standard density of 938 to 940 kg/m³.

4. Terpolymer according to any one of Claims 1 to 3, characterized in that it has a melt index (MI_{2.16}) measured under a 2.16 kg load according to ASTM standard D 1238 of approximately 0.1 to 0.3 g/10 min.

5. Terpolymer according to any one of Claims 1 to 4, characterized in that it has a melt index (MI₅) measured under a 5 kg load according to ASTM standard D 1238 of approximately 0.7 to 1.0 g/10 min.

6. Terpolymer according to any one of Claims 1 to 5, characterized in that it has a melt index (HLMI) measured under a 2.16 kg load according to ASTM standard D 1238 of approximately 12 to 20 g/10 min.

7. Terpolymer according to any one of Claims 1 to 6, characterized in that it has an HLMI/MI_{2.16} ratio of approximately 70 to 100.

8. Process for obtaining a terpolymer according to any one of Claims 1 to 7, in which a mixture of ethylene, of 1-butene and of 1-hexene is polymerized continuously at a temperature of 90 to 110°C in suspension in isobutane, by means of a chromium oxide catalyst supported on an inorganic support containing from 0.25 to 2 % by weight of chromium, preactivated under air at a temperature of 500 to 800°C.

9. Composition consisting essentially of a terpolymer according to any one of Claims 1 to 7.

10. Composition according to Claim 9, characterized in that it has a level of resistance to hydrostatic pressure, measured according to ISO standard TR 9080:1992, which allows it to be classified in the category PE 80.

11. Pipes for conveying fluids under pressure, obtained by extruding a composition according to Claim 9 or 10.

## Patentansprüche

1. Statistisches Ethylen-Terpolymer, das eine Standarddichte von 936 bis 943 kg/m³ aufweist und
- 98.2 bis 99,8 Mol-% von Ethylen abgeleitete Einheiten,
- 0,1 bis 0,3 Mol-% von 1-Buten abgeleitete Einheiten und
- 0,1 bis 1,5 Mol-% von 1-Hexen abgeleitete Einheiten enthält.

2. Terpolymer gemäß Anspruch 1, dadurch gekennzeichnet, dass es
- 98,8 bis 99,3 Mol-% von Ethylen abgeleitete Einheiten,
- 0,1 bis 0,3 Mol-% von 1-Buten abgeleitete Einheiten und
- 0,6 bis 0,9 Mol-% von 1-Hexen abgeleitete Einheiten enthält.

3. Terpolymer gemäß Anspruch 1 oder 2, dadurch gekennzeichnet, dass es eine Standarddichte von 938 bis 940 kg/m³ aufweist.

4. Terpolymer gemäß einem der Ansprüche 1 bis 3, dadurch gekennzeichnet, dass es einen Schmelzindex (MI_{2,16}), gemessen unter einer Last von 2,16 kg gemäß der Norm ASTM D 1238, von ungefähr 0,1 bis 0,3 g/10 min aufweist.

5. Terpolymer gemäß einem der Ansprüche 1 bis 4, dadurch gekennzeichnet, dass es einen Schmelzindex (MI₅), gemessen unter einer Last von 5 kg gemäß der Norm ASTM D 1238, von ungefähr 0,7 bis 1,0 g/10 min aufweist.

6. Terpolymer gemäß einem der Ansprüche 1 bis 5, dadurch gekennzeichnet, dass es einen Schmelzindex (HLMI), gemessen unter einer Last von 21,6 kg gemäß der Norm ASTM D 1238, von ungefähr 12 bis 20 g/10 min aufweist.

7. Terpolymer gemäß einem der Ansprüche 1 bis 6, dadurch gekennzeichnet, dass es ein Verhältnis HLMI/MI_{2,16} von ungefähr 70 bis 100 aufweist.

8. Verfahren zur Herstellung eines Terpolymers gemäß einem der Ansprüche 1 bis 7, bei dem ein Gemisch von Ethylen, 1-Buten und 1-Hexen bei einer Temperatur von 90 bis 110 °C in Suspension in Isobutan mittels eines auf einem anorganischen Träger gebundenen und unter Luft bei einer Temperatur von 500 bis 800 °C voraktivierten Chromoxidkatalysators, der 0,25 bis 2 Gew-% Chrom enthält, kontinuierlich polymerisiert wird.

9. Zusammensetzung, die im wesentlichen aus einem Terpolymer gemäß einem der Ansprüche 1 bis 7 besteht.

10. Zusammensetzung gemäß Anspruch 9, dadurch gekennzeichnet, dass sie einen Grad an Beständigkeit gegen hydrostatischen Druck, gemessen gemäß der Norm ISO TR 9080:1992, aufweist, der es erlaubt, sie in die Kategorie PE 80 einzustufen.

11. Rohre zum Transport von Flüssigkeiten unter Druck, die durch Extrusion einer Zusammensetzung gemäß Anspruch 9 oder 10 erhalten werden.
